(19) Europäisches Patentamt
European Patent Office
Office européen des brevets

(11) **EP 2 557 656 A1**

(12) **EUROPEAN PATENT APPLICATION**
published in accordance with Art. 153(4) EPC

(43) Date of publication:
**13.02.2013 Bulletin 2013/07**

(51) Int Cl.:
*H02J 9/00* (2006.01)

(21) Application number: **10850578.5**

(22) Date of filing: **20.10.2010**

(86) International application number:
**PCT/CN2010/077904**

(87) International publication number:
**WO 2011/134247 (03.11.2011 Gazette 2011/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2010 CN 201010158598**

(71) Applicant: **Huawei Technologies Co., Ltd.
Shenzhen, Guangdong 518129 (CN)**

(72) Inventors:
• **CAO, Wenzong
Shenzhen
Guangdong 518129 (CN)**

• **CHEN, Wenbin
Shenzhen
Guangdong 518129 (CN)**

(74) Representative: **Schmitz, Alexander
Maiwald Patentanwalts GmbH
Elisenhof
Elisenstrasse 3
80335 München (DE)**

(54) **POWER-FAIL RETAINING CIRCUIT, METHOD AND POWER SUPPLY SYSTEM**

(57) The present invention provides a hold-up time circuit, a hold-up time method, and a power supply system. The circuit includes an energy storage capacitor, a step-down circuit and a step-up circuit. A first input end and a second input end of the step-down circuit are separately connected to two electrodes of an input power supply. A first output end and a second output end of the step-down circuit are separately connected to two electrodes of the energy storage capacitor. When the input power supply is normal, the step-down circuit is configured to perform reduction processing on an input voltage of the input power supply, and the energy storage capacitor is charged by an output of the step-down circuit. A first input end and a second input end of the step-up circuit are separately connected to the two electrodes of the energy storage capacitor. When the input power supply is power-off, the step-up circuit is configured to perform boost processing on an energy storage voltage of the energy storage capacitor. The energy storage capacitor is configured to: when the input power supply is normal, finish a charging process through an input voltage that has undergone reduction processing; and when the input power supply is power-off, supply power to an output load through an energy storage voltage that has undergone boost processing. In this embodiment, a long power-off protecting time is achieved when a low voltage is input.

FIG. 1

EP 2 557 656 A1

**Description**

**FIELD OF THE INVENTION**

The present invention relates to the field of electronic technologies, and in particular, to a hold-up time circuit, a hold-up time method and a power supply system.

**BACKGROUND OF THE INVENTION**

With the continuing development of a power supply service, a requirement of a product for continuous stability of the power supply becomes higher and higher. In particular, when an input grid voltage is decreased abnormally, a system needs to rapidly report and store a system running state and an abnormal case of the grid voltage and to be switched to a backup power supply power supply manner, within hold-up time. Therefore, in order to achieve a hold-up time purpose, it is required to set a hold-up time circuit in a power supply system, and required to prolong the hold-up time as much as possible.

In the prior art, the power-off time is prolonged usually by using a boost topology. When an input voltage $V_1$ is normal, the input voltage charges an energy storage capacitor C through a current limiting resistor to store energy. When the input voltage is power-off, the energy storage capacitor implements hold-up time in dependence on its own discharging. When the energy storage voltage is close to an under-voltage point V of an output load after the discharging, a step-up circuit starts to work, boosts the voltage of the energy storage capacitor, and then supplies power to the load. When the energy storage voltage is lowered to a minimum voltage $V_3$ that can be adjusted by the step-up circuit, the hold-up time circuit stops working. It can be known that, the hold-up time T that can be achieved by the solution of the prior art is:

$$T = \frac{1}{2P_0} \eta C \left( V_1^2 - V_3^2 \right) \qquad (1)$$

$P_0$ is the power of the output load, and $\eta$ is the efficiency of the output load.

In the implementation of the present invention, the inventors find that the prior art has at least the following problems. A capacitor itself has a derating limitation for a capacitor voltage-resistant value, so when an input voltage has a wide range, a high voltage-resistant value and a limited layout space have become a bottleneck for selecting a capacitor having a large capacity. Therefore, a difficulty occurs in the selection of a type of a capacitor. Moreover, when a low voltage is input, a long power-off protecting time cannot be achieved.

**SUMMARY OF THE INVENTION**

Embodiments of the present invention provide a hold-up time circuit, a hold-up time method, and a power supply system, so as to achieve a long power-off protecting time when a low voltage is input.

An embodiment of the present invention provides a hold-up time circuit, which includes an energy storage capacitor, a step-down circuit and a step-up circuit.

A first input end and a second input end of the step-down circuit are separately connected to two electrodes of an input power supply. A first output end and a second output end of the step-down circuit are respectively connected to two electrodes of the energy storage capacitor. When the input power supply is normal, the step-down circuit is configured to perform reduction processing on an input voltage of the input power supply, and an output of the step-down circuit charges the energy storage capacitor.

A first input end and a second input end of the step-up circuit are separately connected to the two electrodes of the energy storage capacitor. When the input power supply is power-off, the step-up circuit is configured to perform boost processing on an energy storage voltage of the energy storage capacitor.

The energy storage capacitor is configured to: when the input power supply is normal, finish a charging process through an input voltage that has undergone reduction processing, and when the input power supply is power-off, supply power to an output load through the energy storage voltage that has undergone boost processing.

An embodiment of the present invention provides a hold-up time method, which includes:

when an input power supply is normal, charging an energy storage voltage of an energy storage capacitor through an input voltage has undergone reduction processing; and

when the input power supply is power-off, supplying power to an output load through an energy storage voltage that has undergone boost processing.

An embodiment of the present invention provides a power supply system, which includes an input power supply, a load circuit and the aforementioned hold-up time circuit.

It can be seen that, in the hold-up time circuit, the hold-up time method and the power supply system in the embodiments of the present invention, when the input power supply is normal, the energy storage capacitor is charged through an input voltage has undergone reduction processing, and when the input power supply is power-off, hold-up time processing is performed on an output load through an energy storage voltage of an energy storage capacitor, where the energy storage voltage has undergone boost processing. In other words, in the embodiments of the present invention, a manufacturing characteristic of a capacitor is used, and under a requirement for the same volume, the capacity of a capacitor having a low voltage-resistant value is far higher than the capacity of a capacitor having a high voltage-resistant value. The embodiments of the present invention implement the selection of a low-voltage capacitor by performing reduction processing on an input voltage, so as to assure that the selection of a capacitor having a large capacity is implemented in a low voltage. Thereby, the maximum energy storage in a low voltage is implemented. During the power-off, the energy stored in the capacitor having a large capacity performs a boost action on the energy storage capacitor through a step-up circuit, so as to achieve long hold-up time. However, in the prior art, if a high voltage is input, the selection range of a capacitor is narrow (which is limited by a high voltage-resistant value and a limited layout space). That is, a capacitor having a large volume and a large capacity cannot be used. Therefore, the long hold-up time cannot be achieved. On the contrary, if a low voltage is input, the selection range of a capacitor is wide, and may include a capacitor having a large volume and a large capacity. However, the input voltage is close to an under-voltage point of a load, so the long hold-up time cannot be achieved either. It can be seen that, compared with the prior art, the method provided in this embodiment avoids the problem in the prior art that it is difficult to select a capacitor for an input voltage having a wide range. In the embodiments of the present invention, the selection of a capacitor having a low voltage-resistant value and a large capacity is implemented by performing reduction processing on an input voltage. Then the step-up circuit boosts the capacitor, which achieves a long power-off protecting time when a low voltage is input in a condition that the input voltage has a wide range.

**BRIEF DESCRIPTION OF THE DRAWINGS**

In order to more clearly describe technical solutions according to the embodiments of the present invention and in the prior art, accompanying drawings which may be used in the description of the embodiments of the present invention or the prior art have been briefly introduced in the following. Apparently, the accompanying drawings described in the following are merely some embodiments of the present invention, and persons of ordinary skill in the art may obtain other accompanying drawings according to the accompanying drawings without any creative effort.

FIG. 1 is a schematic structural diagram of a frame of a first embodiment of a hold-up time circuit applied in a power supply system according to the present invention;

FIG. 2 is a schematic structural diagram of a specific circuit of a second embodiment of a hold-up time circuit applied in a power supply system according to the present invention;

FIG. 3 is a flowchart of a first embodiment of a hold-up time method according to the present invention; and

FIG. 4 is a flowchart of a second embodiment of a hold-up time method according to the present invention.

**DETAILED DESCRIPTION OF THE EMBODIMENTS**

In order to make the objectives, technical solutions, and advantages of embodiments of the present invention clearer, the technical solutions in the embodiments of the present invention are clearly and completely described in the following with reference to the accompanying drawings. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

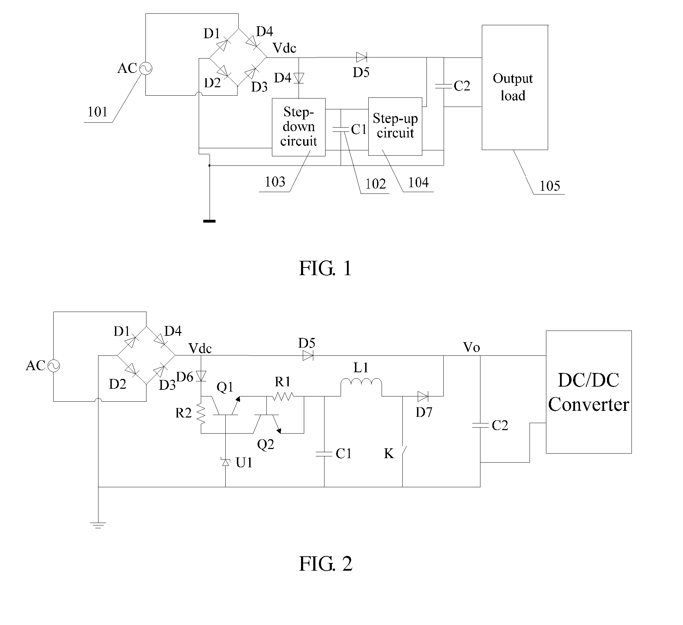

FIG. 1 is a schematic structural diagram of a frame of a first embodiment of a hold-up time circuit in a power supply system according to the present invention. As shown in FIG. 1, this embodiment provides a hold-up time circuit. The hold-up time circuit provided in this embodiment may include an energy storage capacitor 102, a step-down circuit 103 and a step-up circuit 104.

A first input end and a second input end of the step-down circuit 103 are separately connected to two electrodes of an input power supply 101. Moreover, a first output end and a second output end of the step-down circuit 103 are separately connected to two electrodes of the energy storage capacitor 102. The step-down circuit 103 is configured to perform reduction processing on an input voltage of the input power supply 101 when the input power supply 101 is normal. An output of the step-down circuit 103 is used to charge the energy storage capacitor 102.

A first input end and a second input end of the step-up circuit 104 are separately connected to the two electrodes of the energy storage capacitor 102. The step-up circuit 104 is configured to perform boost processing on an energy storage voltage of the energy storage capacitor 102 when the input power supply 101 is power-off.

The energy storage capacitor 102 is configured to: when the input power supply 101 is normal, finish a charging process through an input voltage that has undergone reduction processing, and when the input power supply 101 is power-off, supply power to an output load 105 through the energy storage voltage that has under gone boost processing.

It can be seen that, this embodiment provides a hold-up time circuit, which includes an energy storage capacitor, a step-down circuit and a step-up circuit. When an input power supply is normal, the step-down circuit performs reduction processing on an input voltage. The input voltage that has undergone reduction processing charges the energy storage capacitor. When the input power supply is power-off, the step-up circuit performs boost processing on an energy storage voltage of the energy storage capacitor, and the energy storage voltage that has under gone boost processing supplies power to an output load. In other words, the embodiment of the present invention, a manufacturing characteristic of a capacitor is used: under a requirement for the same volume, the capacity of a capacitor having a low voltage-resistant value is far higher than the capacity of a capacitor having a high voltage-resistant value. In the embodiment of the present invention, the selection of a low-voltage capacitor is implemented by performing reduction processing on an input voltage, so as to assure that the selection of a capacitor having a large capacity is implemented in a low voltage. Thereby, the maximum energy storage in a low voltage is implemented. During the power-off, the energy stored in the capacitor having a large capacity performs a boost action on the energy storage capacitor through the step-up circuit, so as to achieve long hold-up time. However, in the prior art, if a high voltage is input, the selection range of a capacitor is narrow. That is, a capacitor having a large volume and a large capacity cannot be used. Therefore, the long hold-up time cannot be achieved. On the contrary, if a low voltage is input, the selection range of a capacitor is wide, and may include a capacitor having a large volume and a large capacity. However, the input voltage is close to an under-voltage point of a load, so the long hold-up time cannot be achieved either. It can be seen that, compared with the prior art, the method provided in this embodiment avoids the problem in the prior art that it is difficult to select a capacitor for an input voltage having a wide range. In the embodiment of the present invention, the selection of a capacitor having a low voltage-resistant value and a large capacity is implemented by performing reduction processing on an input voltage. Then the step-up circuit boosts the capacitor, which assures a long hold-up time function when a low voltage is input. Thereby, it is assured that a long power-off protecting time can still be achieved when the low voltage is input in a condition that the input voltage has a wide range.

FIG. 2 is a schematic structural diagram of a second embodiment of a specific circuit of a hold-up time circuit applied in a power supply system according to the present invention. As shown in FIG. 2, this embodiment provides a specific hold-up time circuit. Based on the first embodiment, in this embodiment, the step-down circuit may specifically include a first electronic triode Q1, a second electronic triode Q2, a zener voltage regulator U1, a first resistor R1 and a second resistor R2. Specifically, a collector of the first electronic triode Q1 and a common ground end form the first input end and the second input end of the step-down circuit, respectively. An emitter of the second electronic triode Q2 and the common ground end form the first output end and the second output end of the step-down circuit, respectively. The two electronic triodes Q1 and Q2 are reversely connected together. Specifically, a base of the first electronic triode Q1 is connected to a collector of the second electronic triode Q2. An emitter of the first electronic triode Q1 is connected to a base of the second electronic triode Q2. The second resistor R2 is connected between the collector and the base of the first electronic triode Q1. That is, one end of the second resistor R2 is connected to the collector of the first electronic triode Q1, and the other end is connected to the base of the first electronic triode Q1. A negative electrode of the zener voltage regulator U1, the other end of the second resistor R2 and the collector of the second electronic triode Q2 are all connected to the base of the first electronic triode Q1. A positive electrode of the zener voltage regulator U1 is connected to the common ground end. That is, the zener voltage regulator U1 is connected between the base of the first electronic triode Q1 and the common ground end. The positive electrode of the zener voltage regulator U1 is connected to the common ground end, and the negative electrode is connected to the base of the first electronic triode Q1. The base of the second electronic triode Q2 and one end of the first resistor R1 are both connected to the emitter of the first electronic triode Q1, and the other end of the first resistor R1 is connected to the emitter of the second electronic triode Q2. That is, the first resistor R1 is connected between the base and the emitter of the second electronic triode Q2, one end of the first resistor R1 is connected to the base of the second electronic triode Q2, and the other end is connected to the emitter of the second electronic triode Q2.

Referring to FIG. 2, the hold-up time circuit in this embodiment may be specifically applied in a circuit system that has an input power-off requirement and is sensitive to a grid voltage. The input power supply in this embodiment may be a power supply that is directly input by a direct current source, or may be a power supply that is obtained by being input by an alternating current source and then being rectified by a rectifying circuit. When the input power supply is normal, the step-down circuit works, while the step-up circuit does not work. An input voltage of the input power supply first enters the step-down circuit. The step-down circuit performs reduction processing on the input voltage. Specifically, by controlling a feedback benchmark of a converter or a power-supply voltage (VCC) of a pulse width modulation (Pulse Width Modulation, PWM for short below) chip, the PWM of the step-up circuit is switched off when the input power supply works normally, so that disturbance to the main loop is avoided. The energy storage capacitor in this embodiment may specifically be a capacitor C1, whose two electrodes are separately connected to the two output ends of the step-down circuit. When the power supply works normally, the input voltage that has undergone reduction processing charges the energy storage capacitor. The energy storage capacitor may be one capacitor, or may be formed by several capacitors connected in parallel. This embodiment takes one capacitor as an example for description. According to a manufacturing characteristic of a capacitor, under a condition of the same volume, the capacity of a capacitor having a low voltage-resistant value is far higher than the capacity of a capacitor having a high voltage-resistant value. Therefore, in this embodiment, by performing reduction processing on an input voltage and then charging an energy storage capacitor by the input voltage that has undergone reduction processing, a low voltage-resistant value of the capacitor may be assured, so that a capacitor having a large capacity may be selected. The defect in the prior art that it is difficult to select a capacitor in a case of a voltage input of a wide range is overcome. The selection of a capacitor having a large capacity is assured when a low voltage is input, so that the energy storage capacitor may store the maximum energy in a low voltage.

In this embodiment, the step-down circuit may specifically be a linear voltage stabilizing circuit, a buck converter (Buck Converter), a buck-boost converter (Buck-Boost Converter), or a Cuk converter (Cuk Converter). The step-up circuit may specifically be a boost converter (Boost Converter), a single-ended primary inductance converter (Single-Ended Primary Inductance Converter; SEPIC for short below), or a flyback converter (Flyback Converter). FIG. 2 only shows a typical Boost structure, which is formed by an inductor L1, a switch K and a diode D7. One end of the inductor L1 is connected to one end of an energy storage capacitor C1, and the other end of the inductor L1 is connected to a positive electrode of the diode D7 and one end of the switch K. The other end of the energy storage capacitor C1 and the other end of the switch K are both connected to a common ground end. An output load is connected between a negative electrode of the diode D7 and the common ground end. When the input power supply is power-off, the step-down circuit stops working, and the step-up circuit starts to work. The step-up circuit performs boost processing on an energy storage voltage of the energy storage capacitor. Then, the energy storage voltage of the energy storage capacitor supplies power to the output load, where the energy storage voltage has undergone boost processing. That is, the energy stored in the energy storage capacitor continues to provide energy to the load, so as to implement the hold-up time function.

Moreover, the hold-up time circuit of this embodiment may further include a reverse-proof diode D6. A positive electrode of the reverse-proof diode D6 is connected to one end of the input power supply, and a negative electrode thereof is connected to the first input end of the step-down circuit, that is, the collector of the first electronic triode Q1, so as to prevent the energy of the input power supply or the energy storage capacitor from being reversed when the power supply is power-off.

Specifically, in FIG. 2, Vdc is an input voltage obtained by processing an input power supply through a rectifying circuit. Q1, Q2, R1, R2 and U1 are a linear voltage stabilizing circuit, which is used as a step-down circuit in this embodiment. Q1 is an adjuster and U1 is a zener voltage regulator. When the input power supply works normally, Vdc reaches a stabilized voltage through the function of R2, U1 and Q1. Specifically, when the increase of the output load causes the increase of Vo, the voltage of the base of Q1 is relatively reduced, the current passing through Q1 is also reduced accordingly, and the output voltage is also reduced, so the output is kept constant. Q1, Q2, R1, U1 and C1 form a charging loop of the energy storage capacitor C1. After reduction processing is performed on Vdc, the input voltage that has undergone reduction processing charges the energy storage capacitor C1. In the drawing, boost processing is performed by a simple Step-up circuit on the energy storage voltage of C1 when the input power supply is power-off, so that an output load DC/DC converter can still work normally for a period of time after the input power supply is power-off. Assume that the input voltage that has undergone reduction processing is $V_4$. The value of $V_4$ is slightly lower than an under-voltage point $V_2$ of the output load. When the energy storage voltage of the energy storage capacitor is lowered to $V_3$, the step-up circuit stops working. The hold-up time T that can be achieved by using the method provided in this embodiment is:

$$T = \frac{1}{2P_0} \eta C_1 \left( V_4^2 - V_3^2 \right) \qquad (2)$$

$P_0$ is the power of the output load, and $\eta$ is the efficiency of the output load. Compared with the aforementioned formula (1), in a condition of a low voltage input, $V_1$ and $V_4$ are basically equal to each other. However, with the layout space being the same, the capacitance value C of the energy storage capacitor in this embodiment is far larger than the capacitance value C of an energy storage capacitor in the prior art. It can be known that, in comparison with the prior art, the hold-up time may be prolonged by using the method provided in this embodiment. For example, experiments prove that, under a condition of the same volume, the capacitance value of a capacitor having a voltage-resistant value of 42 V is 212.8% of the capacitance value of a capacitor having a voltage-resistant value of 80 V. Therefore, the hold-up time that may be achieved in this embodiment is up to more than twice that of the prior art.

It can be seen that, this embodiment provides a hold-up time circuit, which includes an energy storage capacitor, a step-down circuit and a step-up circuit. When an input power supply is normal, the step-down circuit performs reduction processing on an input voltage. The input voltage that has undergone reduction processing charges the energy storage capacitor. When the input power supply is power-off, the step-up circuit performs boost processing on an energy storage voltage of the energy storage capacitor, and the energy storage voltage that has undergone boost processing supplies power to an output load. In other words, in the embodiment of the present invention, the manufacturing characteristic of a capacitor is used: under a requirement for the same volume, the capacity of a capacitor having a low voltage-resistant value is far higher than the capacity of a capacitor having a high voltage-resistant value. In the embodiment of the present invention, the selection of a low-voltage capacitor is implemented by performing reduction processing on an input voltage, so as to assure that the selection of a capacitor having a large capacity is implemented in a low voltage. Thereby, the maximum energy storage in a low voltage is achieved. During the power-off, the energy stored in the capacitor having a large capacity performs a boost action on the energy storage capacitor through the step-up circuit, so as to achieve a long hold-up time. However, in the prior art, if a high voltage is input, the selection range of a capacitor is narrow. That is, a capacitor having a large volume and a large capacity cannot be used. Therefore, the long hold-up time cannot be achieved. On the contrary, if a low voltage is input, the selection range of a capacitor is wide, and may include a capacitor having a large volume and a large capacity. However, the input voltage is close to an under-voltage point of a load, so the long hold-up time cannot be achieved either. It can be seen that, compared with the prior art, the method provided in this embodiment avoids the problem in the prior art that it is difficult to select a capacitor for an input voltage having a wide range. In the embodiment of the present invention, the selection of a capacitor having a low voltage-resistant value and a large capacity is implemented by performing reduction processing on an input voltage. Then the step-up circuit boosts the capacitor, which assures that the selection of a capacitor having a large capacity is implemented in a low voltage and achieves a long power-off protecting time when a low voltage is input in a condition that the input voltage has a wide range.

An embodiment of the present invention further provides a power supply system. The power supply system includes an input power supply, a load circuit and the hold-up time circuit shown in FIG. 1 or FIG. 2.

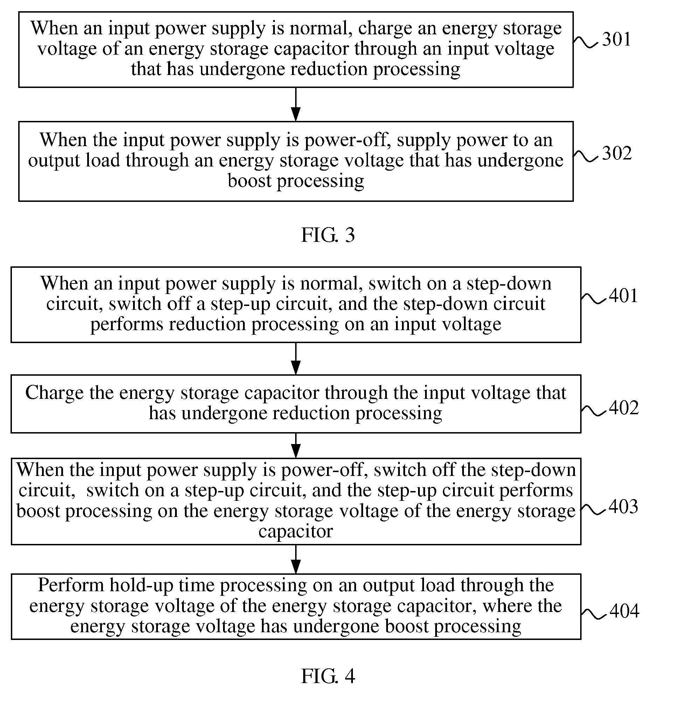

FIG. 3 is a flowchart of a first embodiment of a hold-up time method according to the present invention. As shown in FIG. 3, this embodiment provides a hold-up time method, which may include the following steps.

Step 301: When an input power supply is normal, charge an energy storage voltage of an energy storage capacitor through an input voltage that has undergone reduction processing.

Step 302: When the input power supply is power-off, supply power to an output load through an energy storage voltage that has undergone boost processing.

It can be seen that, this embodiment provides a hold-up time method. When the input power supply is normal, the energy storage capacitor is charged through the input voltage that has undergone reduction processing. When the input power supply is power-off, the energy storage voltage of the energy storage capacitor supplies power to the output load, where the energy storage voltage has undergone boost processing. In other words, in the embodiment of the present invention, a manufacturing characteristic of a capacitor is used: under a requirement for the same volume, the capacity of a capacitor having a low voltage-resistant value is far higher than the capacity of a capacitor having a high voltage-resistant value. In the embodiment of the present invention, the selection of a low-voltage capacitor is implemented by performing reduction processing on an input voltage, so as to assure that the selection of a capacitor having a large capacity is implemented in a low voltage. Thereby, the maximum energy storage in a low voltage is achieved. During the power-off, the energy stored in the capacitor having a large capacity performs a boost action on the energy storage capacitor through the step-up circuit, so as to achieve long hold-up time. However, in the prior art, if a high voltage is input, the selection range of a capacitor is narrow. That is, a capacitor having a large volume and a large capacity cannot be used. Therefore, the long hold-up time cannot be achieved. On the contrary, if a low voltage is input, the selection range of a capacitor is wide, and may include a capacitor having a large volume and a large capacity. However, the input voltage is close to an under-voltage point of a load, so the long hold-up time cannot be achieved either. It can be seen that, compared with the prior art, the method provided in this embodiment avoids the problem in the prior art that it is difficult to select a capacitor for an input voltage having a wide range. In the embodiment of the present invention, the selection of a capacitor having a low voltage-resistant value and a large capacity is implemented by performing that has undergone reduction processing on an input voltage. Then the step-up circuit boosts the capacitor, which assures the implementation of a long hold-up time function when a low voltage is input, and achieves a long power-off protecting time when the low voltage is input in a condition that the input voltage has a wide range.

FIG. 4 is a flowchart of a second embodiment of a hold-up time method according to the present invention. As shown in FIG. 4, this embodiment provides a hold-up time method. Specifically, each step of this embodiment may be implemented by use of the circuit structure shown in FIG. 2, which is not detailed again herein. This embodiment may include the following steps.

Step 401: When an input power supply is normal, switch on a step-down circuit, switch off a step-up circuit, and the step-down circuit performs reduction processing on an input voltage.

In this embodiment, the step-down circuit and the step-up circuit are set in the circuit. The step-down circuit may specifically be a linear power supply, a linear converting circuit, or a buck converter (Buck Converter). The step-up circuit may specifically be a Boost Converter, a Sepic Converter, or a Flyback Converter. When the input power supply works normally, the step-down circuit is switched on and the step-up circuit is switched off. Specifically, by controlling a feedback benchmark of a converter or a power-supply voltage (VCC) of a PWM chip, the PWM of the step-up circuit is switched off when the input power supply works normally, so that disturbance to the main loop is avoided. When the input power supply works normally, the input voltage of the input power supply first enters the step-down circuit. The step-down circuit performs reduction processing on the input voltage.

Step 402: Charge the energy storage capacitor through the input voltage that has undergone reduction processing.

In this embodiment, when the input power supply works normally, reduction processing is performed by the step-down circuit on the input voltage. The input voltage that has undergone reduction processing charges the energy storage capacitor. The energy storage capacitor in this embodiment may be one capacitor, or may be formed by several capacitors connected in parallel. According to a manufacturing characteristic of a capacitor, under a condition of the same volume, the capacity of a capacitor having a low voltage-resistant value is higher than the capacity of a capacitor having a high voltage-resistant value. Therefore, in this embodiment, by performing reduction processing on an input voltage and then charging an energy storage capacitor by the input voltage that has undergone reduction processing, a low voltage-resistant value of the capacitor may be assured, so that a capacitor having a large capacity may be selected. The defect in the prior art that it is difficult to select a capacitor in a condition of a voltage input of a wide range is overcome. The selection of a capacitor having a large capacity is assured when a low voltage is input, so that the energy storage capacitor may store the maximum energy in a low voltage.

Step 403: When the input power supply is power-off, switch off the step-down circuit, switch on the step-up circuit, and the step-up circuit performs boost processing on the energy storage voltage of the energy storage capacitor.

When the input power supply is power-off, the step-down circuit is switched off, and the step-up circuit is switched on. The step-up circuit starts to work. The step-up circuit performs boost processing on the energy storage voltage of the energy storage capacitor.

Step 404: Perform hold-up time processing on an output load through the energy storage voltage of the energy storage capacitor, where the energy storage voltage has undergone boost processing.

When the input power supply is power-off, the step-up circuit starts to work. When the step-up circuit perform boost on the energy storage voltage, hold-up time is performed on the output load through the energy storage voltage of the energy storage capacitor at the same time, where the energy storage voltage has undergone boost processing. That is, the energy stored in the energy storage capacitor continues to provide energy for the load, so as to implement the hold-up time function.

It can be seen that, this embodiment provides a hold-up time method. When the input power supply is normal, the step-down circuit performs reduction processing on the input voltage. The input voltage that has undergone reduction processing charges the energy storage capacitor. When the input power supply is power-off, the step-up circuit performs boost processing on the energy storage voltage of the energy storage capacitor. Moreover, the energy storage voltage that has undergone boost processing performs hold-up time processing on the output load. In other words, in the embodiment of the present invention, the manufacturing characteristic of the capacitor is used: under a requirement for the same volume, the capacity of a capacitor having a low voltage-resistant value is far higher than the capacity of a capacitor having a high voltage-resistant value. In the embodiment of the present invention, the selection of a low-voltage capacitor is implemented by performing reduction processing on an input voltage, so as to assure that the selection of a capacitor having a large capacity is implemented in a low voltage. Thereby, the maximum energy storage in a low voltage is achieved. During the power-off, the energy stored in the capacitor having a large capacity performs a boost action on the energy storage capacitor through the step-up circuit, so as to achieve a long hold-up time. However, in the prior art, if a high voltage is input, the selection range of a capacitor is narrow. That is, a capacitor having a large volume and a large capacity cannot be used. Therefore, the long hold-up time cannot be achieved. On the contrary, if a low voltage is input, the selection range of a capacitor is wide, and may include a capacitor having a large volume and a large capacity. However, the input voltage is close to an under-voltage point of a load, so the long hold-up time cannot be achieved either. It can be seen that, compared with the prior art, the method provided in this embodiment avoids the problem in the prior art that it is difficult to select a capacitor for an input voltage having a wide range. In the embodiment of the present invention, the selection of a capacitor having a low voltage-resistant value and a large capacity is implemented by performing reduction processing on an input voltage. Then the step-up circuit boosts the capacitor, which assures the implementation of a long hold-up time function when a low voltage is input, assures the selection of a capacitor having a large capacity in a low voltage, and achieves a long power-off protecting time when the low voltage is input in a condition that the input voltage has a wide range.

Persons of ordinary skill in the art can understand that all or a part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be any medium that is capable of storing program codes, such as an ROM, an RAM, a magnetic disk, or a compact disk.

Finally, it should be noted that the above embodiments are merely provided for describing the technical solutions of the present invention, but not intended to limit the present invention. It should be understood by persons of ordinary skill in the art that although the present invention has been described in detail with reference to the embodiments, modifications can be made to the technical solutions described in the embodiments, or equivalent replacements can be made to some technical features in the technical solutions, and such modifications or replacements do not make the corresponding technical solutions depart from the spirit and scope of the present invention.

**Claims**

1. A hold-up time circuit, comprising an energy storage capacitor, a step-down circuit and a step-up circuit, wherein a first input end and a second input end of the step-down circuit are separately connected to two electrodes of an input power supply; a first output end and a second output end of the step-down circuit are separately connected to two electrodes of the energy storage capacitor; when the input power supply is normal, the step-down circuit is configured to perform reduction processing on an input voltage of the input power supply, and an output of the step-down circuit charges the energy storage capacitor;
   a first input end and a second input end of the step-up circuit are separately connected to the two electrodes of the energy storage capacitor; when the input power supply is power-off, the step-up circuit is configured to performs boost processing on an energy storage voltage of the energy storage capacitor; and
   the energy storage capacitor is configured to: when the input power supply is normal, finish a charging process through the input voltage that has undergone reduction processing; and when the input power supply is power-off, supply power to an output load through the energy storage voltage that has undergone boost processing.

2. The circuit according to claim 1, wherein the step-down circuit comprises a first electronic triode, a second electronic triode, a zener voltage regulator, a first resistor and a second resistor, wherein
   one end of the second resistor is connected to a collector of the first electronic triode;
   a negative electrode of the zener voltage regulator, the other end of the second resistor and a collector of the second electronic triode are all connected to a base of the first electronic triode; a positive electrode of the zener voltage regulator is connected to a common ground end;
   a base of the second electronic triode and one end of the first resistor are both connected to an emitter of the first electronic triode; the other end of the first resistor is connected to an emitter of the second electronic triode; and the collector of the first electronic triode and the common ground end form the first input end and the second input end of the step-down circuit respectively; the emitter of the second electronic triode and the common ground end form the first output end and the second output end of the step-down circuit respectively.

3. The circuit according to claim 1 or 2, further comprising a reverse-proof diode, wherein a positive electrode of the reverse-proof diode is connected to the input power supply, and a negative electrode of the reverse-proof diode is connected to the first input end of the step-down circuit.

4. The circuit according to claim 1 or 2, wherein the energy storage capacitor is formed by one capacitor or by multiple capacitors connected in parallel.

5. The circuit according to claim 1, wherein the step-down circuit is a linear voltage stabilizing circuit, a buck converter Buck Converter, a buck-boost converter Buck-Boost Converter, or a Cuk converter Cuk Converter; the step-up circuit is a boost converter Boost Converter, a single-ended primary inductance converter SEPIC or a flyback converter Flyback Converter.

6. A hold-up time method, comprising:

   when an input power supply is normal, charging an energy storage voltage of an energy storage capacitor through an input voltage that has undergone reduction processing; and
   when the input power supply is power-off, supplying power to an output load through an energy storage voltage that has undergone boost processing.

**7.** The method according to claim 6, further comprising:

when the input power supply is normal, switching on a step-down circuit, switching off a step-up circuit, and performing, by the step-down circuit, reduction processing on the input voltage.

**8.** The method according to claim 6 or 7, further comprising:

when the input power supply is power-off, switching off the step-down circuit, switching on the step-up circuit, and performing, by the step-up circuit, boost processing on the energy storage voltage of the energy storage capacitor.

**9.** A power supply system, comprising: an input power supply, a load circuit and the hold-up time circuit according to any one of claims 1 to 5.

FIG. 1

FIG. 2

When an input power supply is normal, charge an energy storage voltage of an energy storage capacitor through an input voltage that has undergone reduction processing ~301

When the input power supply is power-off, supply power to an output load through an energy storage voltage that has undergone boost processing ~302

FIG. 3

When an input power supply is normal, switch on a step-down circuit, switch off a step-up circuit, and the step-down circuit performs reduction processing on an input voltage ~401

Charge the energy storage capacitor through the input voltage that has undergone reduction processing ~402

When the input power supply is power-off, switch off the step-down circuit, switch on a step-up circuit, and the step-up circuit performs boost processing on the energy storage voltage of the energy storage capacitor ~403

Perform hold-up time processing on an output load through the energy storage voltage of the energy storage capacitor, where the energy storage voltage has undergone boost processing ~404

FIG. 4

<table>
<tr><td colspan="2" align="center"><h2>INTERNATIONAL SEARCH REPORT</h2></td><td>International application No.<br><br>PCT/CN2010/077904</td></tr>
<tr><td colspan="3"><b>A.   CLASSIFICATION OF SUBJECT MATTER</b><br><br><div align="center">H02J 9/00 (2006.01) i</div><br>According to International Patent Classification (IPC) or to both national classification and IPC</td></tr>
<tr><td colspan="3"><b>B.   FIELDS SEARCHED</b></td></tr>
<tr><td colspan="3">Minimum documentation searched (classification system followed by classification symbols)<br><br><div align="center">IPC: H02J</div></td></tr>
<tr><td colspan="3">Documentation searched other than minimum documentation to the extent that such documents are included in the fields searched<br><br></td></tr>
<tr><td colspan="3">Electronic data base consulted during the international search (name of data base and, where practicable, search terms used)<br><br>WPI, EPODOC, CNPAT:<br><br>capacitor, storage, buck, step down, boost, step up, charge, discharge, fail, power, battery, standby, back up</td></tr>
</table>

**C.   DOCUMENTS CONSIDERED TO BE RELEVANT**

| Category* | Citation of document, with indication, where appropriate, of the relevant passages | Relevant to claim No. |
|---|---|---|
| X | CN 201075737 Y (YIZHENG MEMORITECH SHENZHEN CO LTD) 18 Jun. 2008 (18.06.2008) see page 1 and page 3, line 18 to page 5, line 3 of the description, Fig.3 | 1, 3-9 |
| A | CN 201401669 Y (ZHANG, Hongtu et al.) 10 Feb. 2010 (10.02.2010) see page 3, line 18 to line 24 of the description, Fig.3 | 2 |
| P, X | CN 101860200 A (HUAWEI TECHNOLOGIES CO LTD) 13 Oct. 2010 (13.10.2010) see claims 1-9 | 1-9 |
| A | CN 1335661 A (YU, Baichao) 13 Feb. 2002 (13.02.2002) see the whole document | 1-9 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim (S) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&" document member of the same patent family |

| Date of the actual completion of the international search<br><br><div align="center">24 Dec. 2010 (24.12.2010)</div> | Date of mailing of the international search report<br><br><div align="center">**20 Jan. 2011 (20.01.2011)**</div> |
|---|---|
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br><div align="center">HUANG, Jun</div><br>Telephone No. (86-10)62411799 |

Form PCT/ISA /210 (second sheet) (July 2009)

EP 2 557 656 A1

## INTERNATIONAL SEARCH REPORT
### Information on patent family members

International application No.

PCT/CN2010/077904

| Patent Documents referred in the Report | Publication Date | Patent Family | Publication Date |
|---|---|---|---|
| CN 201075737 Y | 18.06.2008 | WO 2009013731 A1 | 29.01.2009 |
| | | EP 2171721 A1 | 07.04.2010 |
| | | US 2010226194 A | 09.09.2010 |
| CN 201401669 Y | 10.02.2010 | NONE | |
| CN 101860200 A | 13.10.2010 | NONE | |
| CN 1335661 A | 13.02.2002 | NONE | |

Form PCT/ISA /210 (patent family annex) (July 2009)